# EUROPÄISCHE PATENTSCHRIFT

(11) **EP 0 611 426 B1**
(45) Veröffentlichungstag und Bekanntmachung des Hinweises auf die Patenterteilung: **01.05.1996**
(21) Anmeldenummer: 92923272.6
(22) Anmeldetag: 12.11.1992
(51) Int. Cl.: F16H 61/04, F16H 3/12

(54) **KRAFTFAHRZEUGGETRIEBE**
MOTOR VEHICLE GEARBOX
BOITE DE VITESSES DE VEHICULE AUTOMOBILE

(30) Priorität: 12.11.1991 DE 4137143
(43) Veröffentlichungstag der Anmeldung: 24.08.1994
(73) Patentinhaber: ZF FRIEDRICHSHAFEN Aktiengesellschaft, D-88038 Friedrichshafen (DE)
(72) Erfinder: MILBRADT, Gerhard, D-7990 Friedrichshafen (DE); GAZYAKAN, Ünal, D-7990 Friedrichshafen (DE)
(86) Internationale Anmeldenummer: EP9202598
(87) Internationale Veröffentlichungsnummer: WO9310378

(56) Entgegenhaltungen:
- EP-A- 0 150 583
- GB-A- 2 119 459
- US-A- 4 449 416

## Beschreibung

Die Erfindung bezieht sich auf ein Kraftfahrzeuggetriebe, insbesondere ein mehrstufiges synchronisiertes Vorgelegegetriebe gemäß Oberbegriff des Anspruchs 1, wie es aus der GB-A 2 119 459 bekannt ist, das als Doppelkupplungsgetriebe ausgebildet ist.

Bei den heutigen mehrstufigen Kraftfahrzeuggetrieben sind einem Schaltpaket jeweils zwei aufeinanderfolgende bzw. benachbarte Gänge zugeordnet. Durch ein erstes Schaltpaket, bestehend beispielsweise aus Schaltmuffe mit oder ohne Synchronisierung, Schaltschwinge oder Schaltklaue usw., werden beispielsweise der erste und der zweite Gang ein- bzw. ausgerückt, während ein zweites Schaltpaket beispielsweise den dritten und vierten Gang, und eventuell über ein drittes Schaltpaket weitere zwei Gänge geschaltet werden können. Wird bei einem solchen bekannten Getriebe der nächsthöhere oder niedrigere Gang geschaltet, findet während des Schaltvorgangs, zumindest bei den niedrigen Gängen, eine Zugkraftunterbrechung statt, da über die Synchroneinrichtung des nächsten Ganges, beispielsweise beim Hochschalten, eine Geschwindigkeitsangleichung der Vorgelegewelle vorgenommen werden muß. Bei Gangwechsel vom ersten in den zweiten Gang, muß die Synchroneinrichtung des zweiten Ganges eine Abbremsung des entsprechenden Gangrades und damit der gesamten Vorgelegewelle vornehmen, um das Einrücken zu ermöglichen. Hierdurch findet ein verhältnismäßig hoher Verschleiß (hohe Belastung) der Synchronpakete statt, wodurch deren Lebensdauer relativ kurz ist. Zudem wird eine erhöhte Synchronisierungszeit benötigt, wodurch es mit den Schaltnebenzeiten, die aufgrund der Anlaufvorgänge während des Gangwählvorganges und von Totzeiten in der Steuerung entstehen können, zu einer langen Zugkraftunterbrechung kommt. Um beispielsweise einem solch hohen Verschleiß zu begegnen, müssen die Synchronpakete relativ groß ausgelegt werden.

Aufgabe der Erfindung ist es, ein Kraftfahrzeuggetriebe oben genannter Gattung anzugeben, das wesentlich verbesserte Schalteigenschaften, verbunden mit erhöhter Lebensdauer, insbesondere seiner Synchroneinrichtungen, in Verbindung mit konstruktiven Verbesserungen, ermöglicht.

Diese Aufgabe wird durch ein erfindungsgemäßes Kraftfahrzeuggetriebe mit den Merkmalen des Patentanspruchs 1 gelöst. Weitere vorteilhafte Ausgestaltungen sind in den Unteransprüchen enthalten.

Demgemäß wird eine neue Gangradanordnung realisiert, d. h. die einem jeden Schaltpaket zugeordneten zwei Gänge sind nicht aufeinanderfolgende Gänge. So werden beispielsweise von einem ersten Schaltpaket die Gänge 1 und 3, von einem zweiten Schaltpaket die Gänge 2 und 4, usw., betätigt. Hierdurch besteht die Möglichkeit, beim Gangwechsel beispielsweise vom ersten in den zweiten oder vom zweiten in den dritten Gang, die getrennte Steuerbarkeit der Gangschalteinrichtungen zu einer Reduzierung der Schaltnebenzeiten auszunützen, da nebeneinanderliegende Gänge durch verschiedene Schaltpakete bzw. Gangschalteinrichtungen betätigt, bzw. geschaltet werden.

Jedem Schaltpaket ist eine Betätigungseinrichtung zugeordnet ist, die unabhängig von den Betätigungseinrichtungen der übrigen Schaltpakete betrieben und gesteuert werden. Dazu kann selbstverständlich jede an sich bekannte Betätigungseinrichtung mit unterschiedlichen Energien, wie hydraulische, pneumatische oder elektrische Einrichtungen, Verwendung finden. Bei den heutigen mehrstufigen Schaltgetrieben wird jedoch immer mehr dazu übergegangen, das in jedem Fahrzeug vorhandene elektrische Bordnetz als Energiequelle zu verwenden, wobei der Trend zudem zur elektronischen Steuerung von Fahrfunktionen geht. Daher ist von besonderem Vorteil, wenn ein Mechanismus, der durch elektrischen Strom gesteuert und betätigt wird, Verwendung findet, beispielsweise ein Elektromotor, in Verbindung mit einer elektronischen Steuerung als Betätigungseinrichtung. Zur Umwandlung der durch den Elektromotor erhaltenen, in bezug auf Drehmoment und Drehrichtung gesteuerten Rotationsbewegung, in eine translatorische Schaltbewegung für das Schaltpaket, kann jede zweckmäßig ausgelegte Einrichtung, die eine solche Wandlung ermöglicht, verwendet werden. So kann beispielsweise ein räumliches Kurvengetriebe, wie Gewindespindel oder Kugelgewindespindel in Verbindung mit einer entsprechenden Mutter, oder eine Zahnstangeneinrichtung, usw. verwendet werden. Durch diese Betätigungseinrichtungen kann eine sehr genaue Steuerung der translatorischen Stellbewegungen für die Schaltpakete des Getriebes erreicht werden.

Dadurch, daß die Betätigungseinrichtungen unabhängig voneinander zu betreiben und zu steuern sind, können die Gangschaltvorgänge so gesteuert werden, daß eine überschneidende Betätigung der Wandler und damit der Schaltpakete, stattfindet. Hierdurch werden die Schaltnebenzeiten verringert. Dies wird dadurch vorgenommen, daß die Synchroneinrichtungen mehrerer Schaltpakete gleichzeitig belastet werden. Dies ist immer dann möglich, wenn beim Heraufschalten (Herunterschalten) noch mindestens ein höherer (tieferer) Gang vorhanden ist. Wird beispielsweise vom ersten in den zweiten Gang geschaltet, kann gleichzeitig mit Betätigung des Schaltpakets für den zweiten Gang auch das Schaltpaket des dritten Ganges belastet werden, um die Geschwindigkeit der Vorgelegewelle herabzusetzen. Durch das Abbremsen bzw. In-Schleifkontakt-Bringen des Schaltpakets des dritten Ganges, zusätzlich zu demjenigen des zweiten Ganges, der geschaltet wird, sinkt die Belastung der einzelnen, belasteten Schaltpakete. Dies bringt erhebliche Vorteile, wie kürzere Schaltzeiten, längere Lebensdauer der Schaltpakete sowie die

Möglichkeit, kleinere Schaltpakete einzusetzen, wodurch insgesamt eine sehr wirtschaftliche Ausführung erreicht wird.

Bei Einsatz des erfindungsgemäßen Schaltsystems, das gemeinhin als System "Schalten-Schalten" bezeichnet wird, im Vergleich mit dem System "Wählen-Schalten" gemäß Stand der Technik, werden überschneidende Schaltungen und damit eine Verringerung der Schaltnebenzeiten mit weiteren, damit zusammenhängenden Vorteilen, möglich.

Nachfolgend wird die Erfindung anhand eines Ausführungsbeispiels im Vergleich mit einem Ausführungsbeispiel gemäß Stand der Technik, unter Bezug auf die Zeichnung, näher erläutert.

Es zeigt:
- Fig. 1: eine schematische Darstellung eines Vierganggetriebes gemäß bekannter Ausführungsform/-Gangradanordung,
- Fig. 2: eine schematische Darstellung eines Vierganggetriebes mit erfindungsgemäßer Gangradanordnung,
- Fig. 3: eine Grundoperationsstruktur der Schaltvorrichtung des erfindungsgemäßen Kraftfahrzeuggetriebes nach Fig. 2.

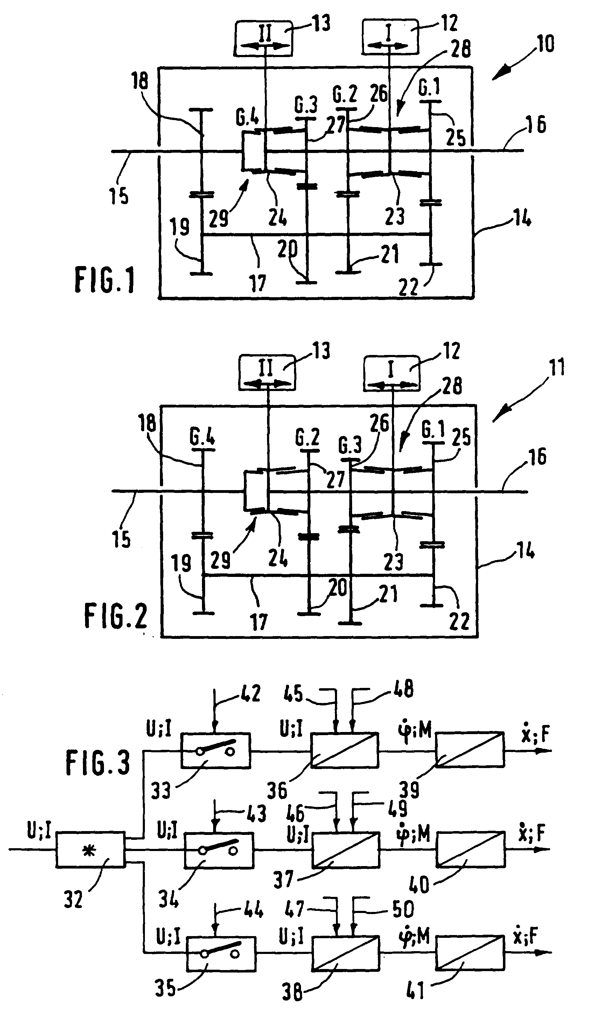

Das in Fig. 1 dargestellte Kraftfahrzeuggetriebe 10 gemäß Stand der Technik ist ein mehrstufiges synchronisiertes Vorgelegegetriebe (vier Gänge) mit klassischem Aufbau, von dem sich das in Fig. 2 schematisch dargestellte erfindungsgemäße Getriebe 11 lediglich durch die Anordnung der Gangräder im Verhältnis zu den Betätigungseinrichtungen 12, 13, unterscheidet.

So sind bei der Anordnung nach Fig. 1 gemäß Stand der Technik jeder Betätigungseinrichtung 12, 13 zwei aufeinanderfolgende Gänge zugeordnet, also der Betätigungseinrichtung 12 der erste und zweite Gang, während durch die Betätigungseinrichtung 13 der dritte und vierte Gang betätigt wird.

Beim erfindungsgemäßen Getriebe nach Fig. 2 sind jeweils einer Betätigungseinrichtung 12, 13 nicht benachbarte Gänge zugeordnet, d. h. der ersten Betätigungseinrichtung 12 der erste und dritte Gang, während der zweiten Betätigungseinrichtung 13 den zweiten und vierten Gang bedient.

Prinzipiell besteht sowohl das bekannte, als auch das erfindungsgemäße Getriebe aus einem Gehäuse 14, in dem eine Antriebsswelle 15 koaxial mit einer Abtriebsswelle 16 angeordnet sind, zu denen achsparallel versetzt eine Vorgelegewelle 17 vorgesehen ist. Die von der Antriebswelle 15 übernommene Drehbewegung wird über die Fixräder 18 und 19 auf die Vorgelegewelle 17 übertragen, auf der entsprechend der vorgesehenen Gangzahl weitere Zahnräder 20, 21 und 22, entsprechend den Gängen eins bis drei, vorgesehen sind. Der vierte Gang wird durch direktes Ankoppeln der Antriebsswelle 15 mit der Abtriebswelle 16 erzielt.

Auf der Abtriebswelle 16 sind drehfest, jedoch axial verschieblich Schaltmuffen 23 und 24 vorgesehen, die mit den Betätigungseinrichtungen 12 bzw. 13 trieblich verbunden sind. Auf der Abtriebswelle 16 sind des weiteren die Losräder 25, 26 und 27 für den ersten, zweiten bzw. dritten Gang angeordnet, die jeweils mit den Zahnrädern 22, 21, bzw. 20 der Vorgelegewelle 17 trieblich verbunden sind. Einem jeden Gangpaar ist ein Schaltpaket 28 bzw. 29 zugeordnet, das jeweils aus der entsprechenden Schaltmuffe 23 bzw. 24, einem an dem entsprechenden Losrad und an der Antriebswelle 15 vorgesehenen Teil und der jeweiligen Synchronisierungseinrichtung besteht.

Im weiteren sind die Funktionen des erfindungsgemäßen Getriebes anhand insbesondere der Darstellung nach Fig. 2 beschrieben.

In den Darstellungen gemäß Fig. 1 und 2 befinden sich die beiden Betätigungseinrichtungen 12 und 13 in Neutralstellung, d. h. kein Gang ist eingerückt. Bei Anfahren des Fahrzeugs ist über die Betätigungseinrichtung 12 der erste Gang eingeschaltet, wodurch eine Bewegungs- bzw. Kraftübertragung von der Antriebsswelle 15 über das Räderpaar 18, 19 über die Vorgelegewelle 17, das Räderpaar 22, 25, die rechte Kupplungs- und Synchroneinrichtung des Schaltpakets 28, Schaltmuffe 23, auf die Abtriebswelle 16 erfolgt.

Ist nun beabsichtigt, aus dem ersten in den zweiten Gang zu schalten, wird über die Betätigungseinrichtung 12, beispielsweise nach Ansteuerung des entsprechenden Motors und der Lineareinrichtung der Betätigungseinrichtung (hier nicht dargestellt), die Schaltmuffe 23 aus ihrem Eingriff mit dem Losrad 25 des ersten Ganges ausgerückt und in die in der Zeichnung dargestellten Neutralstellung gebracht. Gleichzeitig, bzw. kurz aufeinanderfolgend, wird über die zweite Betätigunseinrichtung 13 die Schaltmuffe 24 aus ihrer Neutralstellung auf das Losrad 27 des zweiten Ganges zubewegt. Dabei beginnt die Synchroneinrichtung des Schaltpakets 29 zu greifen und nimmt eine Geschwindigkeitsangleichung des Rades 27 mit der Schaltmuffe 24 bzw. der Abtriebswelle 16 vor, bis die entsprechenden Kupplungsverzahnungen zum Eingriff gebracht werden können.

Gleichzeitig besteht mit dem Beginn der Schaltbewegung durch die Betätigungseinrichtung 13 die Möglichkeit, die Betätigungseinrichtung 12 aus der nach dem Ausrücken des ersten Ganges eingenommenen Neutralstellung auf das Losrad 26 des dritten Ganges zuzubewegen. Dadurch wird das Schaltpaket 28 belastet und trägt ebenfalls zur Geschwindigkeitsangleichung der Vorgelegewelle bei. Durch die praktisch gleichzeitige Belastung der beiden Schaltpakete 28 und 29 des zweiten und dritten Ganges reduziert sich die notwendige Belastung eines jeden Schaltpaketes erheblich, wodurch auch deren konstruktive Auslegung entsprechend geringer gehalten werden kann.

Die gleiche, überlappende Betätigung der beiden Betätigungseinrichtungen 12, 13 kann beim Umschalten vom zweiten in den dritten Gang erreicht werden, indem zur Unterstützung des Schaltpaketes 28, bei der Einschaltung über die Betätigungseinrichtung 12 des dritten Ganges, das Schaltpaket 29 des vierten Ganges, durch dessen Betätigung über die Betätigungseinrichtung 13, vorgenommen wird.

In gleicher Weise kann beim Herunterschalten vom vierten in den dritten Gang bzw. vom dritten in den zweiten Gang jeweils das Schaltpaket des zweiten bzw. ersten Ganges stützend herangezogen werden.

Die in Fig. 3 dargestellte Grundoperationsstruktur einer Schaltvorrichtung für das erfindungsgemäße Getriebe ist für ein Sechsganggetriebe ausgelegt und nicht für ein Vierganggetriebe, wie in Fig. 1 und 2 dargestellt. Es ist aber klar ersichtlich, daß bei einem Vierganggetriebe, bei dem nur zwei Schaltpakete vorhanden sind, auch nur zwei Verzweigungen notwendig sind.

Die dargestellte Grundoperationsstruktur berücksichtigt:
a. die elektrische Energie muß in mechanische Energie umgewandelt werden,
b. es muß eine translatorische Stellbewegung erzeugt werden,
c. die Stellbewegung muß an mehreren, räumlich verschiedenen Orten erzeugt werden und getrennt voneinander zur Verfügung stehen,
d. die Stellrichtung muß umkehrbar sein,
e. der Schaltmechanismus soll aus- bzw. einschaltbar sein,
f. die aktuelle Stellposition soll durch ein elektrisches Signal erkennbar/ermittelbar sein,
g. die Stellbewegung soll steuer- bzw. regelbar sein (Stellweg, Kraft).

Aus dem Schema ist zu erkennen, daß die zur Verwendung kommende elektrische Energie (U, I) bei 32 beispielsweise mit Hilfe einer elektrischen Klemmeneinrichtung, auf eine Anzahlzweige verzweigt wird, die der Anzahl der Betätigungseinrichtungen entspricht. In jeder Verzweigung wird bei 33, 34, 35 ein Koppeln/Entkoppeln mit Hilfe eines beispielsweise entsprechenden Schalters vorgenommen, über den Ein-/Aussignale 42, 43, 44 verarbeitet werden. Im weiteren Verlauf findet jeweils bei 36, 37 bzw. 38 ein Wandeln statt (U, I in ϕ̇, N) durch beispielsweise jeweils einen Elektromotor, wobei gleichzeitig eine Drehmomentsteuerung 45, 46 und 47 und eine Drehrichtungssteuerung 48, 49 bzw. 50 einfließen. Die hierdurch erhaltenen Drehbewegungen werden im weiteren jeweils durch Wandeln (ϕ̇, M in ẋ, F) bei 39, 40 bzw. 41 mit Hilfe beispielsweise von je einer Lineareinrichtung wie Gewindespindel oder ähnlichem, in je eine entsprechende translatorische Stellbewegung für die entsprechenden Betätigungseinrichtungen 12 bzw. 13, umgewandelt. Es findet folglich, wie bereits Eingangs erwähnt, für jede Betätigungseinrichtung eine separate Steuerung statt, die eine überlappende Aktivität der Betätigungseinrichtungen und somit der Schaltpakete ermöglicht.

## Patentansprüche

1. Krafttahrzeuggetriebe, insbesondere mehrstufiges synchroninisiertes Vorgelegegetriebe, bei dem die jeweils einem Schaltpaket (28, 29) benachbart zugeordneten Gänge (1 und 3 bzw. 2 und 4) nicht aufeinander folgende Gänge sind und jedem Schaltpaket (28, 29) eine Betätigungseinrichtung (12, 13) sowie Synchronisiereinrichtungen zugeordnet sind,
**dadurch gekennzeichnet**
daß die Betätigungseinrichtungen (12, 13) mit Mitteln versehen sind, so daß die Betätigungseinrichtungen unabhängig voneinander in der Weise betrieben und gesteuert werden, daß die Synchronisiereinrichtungen mehrerer Schaltpakete (28, 29) gleichzeitig belastet werden.

2. Kraftfahrzeuggetriebe nach Anspruch 1, dadurch **gekennzeichnet**, daß die Mittel jeder Betätigungseinrichtung (12, 13) einen Elektromotor in Verbindung mit einer elektronischen Steuerung aufweisen.

3. Kraftfahrzeuggetriebe nach Anspruch 2, dadurch **gekennzeichnet**, daß der Elektromotor in Verbindung ist mit einer Lineareinrichtung, z. B. einem räumlichen Kurvengetriebe oder Gewindespindel mit Mutter, zur Umwandlung der Rotatationsbewegung des Elektromotors in eine translatorische Schaltbewegung für die Betätigung des Schaltpakets (28, 29).

## Claims

1. Motor vehicle gearing, in particular a multi-speed synchronized transmission gearing, in which the gears (1 and 3 or 2 and 4) associated in each case in an adjacent manner with a gear shift packet (28, 29) are not successive gears and an operating device (12, 13) as well as synchronizing devices are associated with each gear shift packet (28, 29),
characterized in that
the operating devices (12, 13) are provided with means so that the operating devices are operated and controlled independently of one another in such a way that the synchronizing devices of a plurality of gear shift packets (28, 29) are simultaneously loaded.

2. Motor vehicle gearing according to claim 1, characterized in that the means of each operating device (12, 13) comprise an electric motor in conjunction with an electronic controller.

3. Motor vehicle gearing according to claim 2, characterized in that the electric motor is connected to a linear device, e.g. a three-dimensional cam mechanism or threaded spindle and nut, for converting the rotation of the electric motor into a linear gear shift motion for operating the gear shift packet (28, 29).

## Revendications

1. Boîte de vitesses d'un véhicule automobile, en particulier boîte de vitesses à engrenage synchronisé à plusieurs vitesses, dans laquelle les vitesses (1 et 3 ou 2 et 4) qui sont disposées chacune au voisinage d'un relais de changement de vitesses (28, 29) ne sont pas des vitesses qui se suivent et dans laquelle un dispositif de commande (12, 13) tel qu'un dispositif de synchronisation sont adjoints à chaque relais de changement de vitesse (28, 29),
**caractérisée** en ce que
les dispositifs de commande (12, 13) sont pourvus de moyens tels que les dispositifs de commande sont commandés et fonctionnent indépendamment l'un de l'autre, de sorte que les dispositifs de synchronisation de plusieurs relais de changement de vitesse (28, 29) sont chargés en même temps.

2. Boîte de vitesses d'un véhicule automobile selon la revendication 1, **caractérisée** en ce que les moyens de chacun des dispositifs de commande (12, 13) comportent un moteur électrique en liaison avec une commande électronique.

3. Boîte de vitesses d'un véhicule automobile selon la revendication 2, **caractérisée** en ce que le moteur électrique est en liaison avec un dispositif linéaire, par exemple une commande à cames à trois dimensions ou un arbre fileté avec écrou, pour transformer le mouvement de rotation du moteur électrique en un mouvement de translation pour l'actionnement des relais de changement de vitesse (28, 29).
